# DEMANDE DE BREVET EUROPEEN

(11) **EP 1 039 116 A1**
(43) Date de publication de la demande: **27.09.2000**
(21) Numéro de dépôt: 00400508.8
(22) Date de dépôt: 25.02.2000
(51) Int. Cl.: F02D 9/02

(54) **Procédé de commande d'un moteur à combustion interne**

(30) Priorité: 19.03.1999 FR 9903450
(71) Demandeur: Renault, 92109 Boulogne Billancourt (FR)
(72) Inventeur: Fernandez, Alain, 01150 Etampes (FR); Devanne, Nicolas, 92500 Rueil Malmaison (FR); Leroux, Jean-Francois, 92500 Rueil Malmaison (FR)
(74) Mandataire: Fernandez, Francis Lionel

(57) **Abrégé**

Procédé de commande d'un moteur à combustion interne (1) dont le collecteur d'admission (22) est connecté avec au moins un dispositif auxiliaire fonctionnant avec l'assistance de la dépression régnant dans ledit collecteur (22), ledit moteur (1) comportant un papillon des gaz (10) et des soupapes (7,8) manoeuvrés par des actuateurs (7',8',13) pilotés par des moyens électroniques de commande (14), caractérisé en ce que le débit d'air du moteur, déterminé selon le point de fonctionnement du moteur et notamment le couple demandé, est contrôlé sélectivement suivant les besoins en dépression collecteur dudit dispositif auxiliaire (16) en ajustant, soit les lois d'ouverture des soupapes (7,8), l'action sur l'angle d'ouverture du papillon des gaz (10) demeurant limitée (modes GDAS, GDAS'), soit l'angle d'ouverture du papillon des gaz (10) et éventuellement les lois d'ouverture des soupapes (7,8)(modes GDAP, GDAP').

## Description

La présente invention concerne le domaine de la commande des moteurs à combustion interne équipant les véhicules automobiles ou routiers, et notamment les moteurs comportant des systèmes de distribution à soupapes commandées de façon non mécanique.

La présente invention concerne plus particulièrement un procédé de commande de la dépression régnant dans le collecteur d'admission d'un moteur, suivant les besoins de dispositifs auxiliaires qui utilisent pour fonctionner l'assistance de ladite dépression.

Certains types de moteur à combustion interne et en particulier les moteurs à allumage commandé utilisent classiquement un volet obturateur encore appelé papillon des gaz pour contrôler le débit d'air d'admission du moteur en fonction notamment de la position de la commande d'accélérateur. Ce papillon qui est généralement positionné entre le filtre à air et le collecteur d'admission du moteur, génère suivant la valeur de son angle d'overture (ou de fermeture) une dépression plus ou moins importante dans le collecteur d'admission (vis-à-vis de la pression atmosphérique régnant en amont du papillon).

Pour un moteur fonctionnant à richesse 1, c'est-à-dire avec un rapport air/essence stoechiométrique, la dépression est, sauf lors des fonctionnements à pleine charge avec un papillon à pleine ouverture, souvent comprise entre 800 et 600 mbar.

Il est connu d'utiliser cette dépression disponible au niveau du collecteur d'admission pour faire fonctionner des dispositifs auxiliaires tels qu'un dispositif de freinage du véhicule à assistance pneumatique (master-vac), un dispositif de recirculation des gaz de carter (blow-by), ou bien encore un dispositif de purge des vapeurs de carburant piégées dans un filtre à charbon (canister).

Cette dépression générée dans le collecteur d'admission par la présence du papillon des gaz, a toutefois pour inconvénient de diminuer le rendement du moteur en générant des pertes par pompage lors de la phase d'admission des gaz dans le déroulement du cycle thermodynamique (boucle négative du cycle).

Pour réduire ces pertes par pompage et donc augmenter le rendement et par conséquent réduire la consommation en carburant des moteurs, il a été envisagé d'équiper les moteurs à combustion interne de systèmes de distribution permettant de faire varier les lois d'ouverture des soupapes d'admission et d'échappement, en utilisant des actuateurs électromagnétiques, hydrauliques ou encore pneumatiques en lieu et place des traditionnels arbres à cames.

De tels systèmes de distribution à commande non mécanique offrent donc la possibilité d'adapter les lois d'ouverture des soupapes aux différentes conditions de fonctionnement du moteur, et notamment de permettre de contrôler directement le débit d'air admis sans requérir de papillon des gaz en ajustant simplement la durée d'ouverture des soupapes par rapport au cycle moteur. Par exemple, en ajustant le retard ou l'avance à la fermeture admission (fermeture des soupapes d'admission après ou avant le PMB (Point Mort Bas)), il est possible de limiter le remplissage en air des cylindres.

Ces systèmes de distribution pilotés permettent donc de fonctionner avec des valeurs de pression dans le collecteur d'admission voisines de la pression atmosphérique et ainsi de réduire les pertes par pompage du moteur.

Le problème est qu'alors, en l'absence de dépression dans le collecteur du moteur il n'est plus possible de faire fonctionner les dispositifs auxiliaires qui requièrent un niveau élevé de dépression tel que l'assistance au freinage. Il est donc alors nécessaire d'utiliser des sources spécifiques de dépression telle qu'une pompe à vide (comme cela est classiquement le cas pour les moteurs diesels sans papillon des gaz), ce qui toutefois complexifie et renchérit le coût d'un tel moteur.

La présente invention a donc pour objet de remédier à cet inconvénient en permettant le fonctionnement des dispositifs auxiliaires utilisant la dépression régnant dans le collecteur sans pour autant pénaliser le rendement du moteur et ce, grâce à un procédé de commande du moteur basé sur l'utilisation combinée d'une distribution variable et d'un papillon des gaz piloté.

Le procédé de commande selon l'invention concerne un moteur à combustion interne dont le collecteur d'admission est connecté avec au moins un dispositif auxiliaire fonctionnant avec l'assistance de la dépression régnant dans ledit collecteur tel qu'un amplificateur pneumatique d'un dispositif de freinage, ce moteur comportant un papillon des gaz manoeuvré par un actuateur piloté par des moyens électroniques de commande et des soupapes d'admission et d'échappement également manoeuvrées par des actuateurs pilotés par des moyens électroniques de commande.

Selon l'invention, le dispositif objet de la présente invention est caractérisé en ce que le débit d'air du moteur, déterminé selon le point de fonctionnement du moteur et notamment le couple demandé au moteur, est contrôlé sélectivement suivant les besoins en dépression du dispositif auxiliaire en ajustant :
a) les lois d'ouverture des soupapes, l'action sur l'angle d'ouverture du papillon des gaz demeurant limitée ;
b) l'angle d'ouverture du papillon des gaz et éventuellement les lois d'ouverture des soupapes.

Selon une autre caractéristique du procédé de commande d'un moteur objet de la présente invention, lorsque le dispositif auxiliaire nécessite un niveau de dépression suffisant dans le collecteur d'admission, le débit d'air du moteur est alors contrôlé en ajustant l'angle d'ouverture du papillon des gaz et éventuellement les lois d'ouverture des soupapes.

Selon une première variante de réalisation du procédé de commande d'un moteur objet de la présente invention, lorsque le débit d'air est contrôlé en ajustant la position de l'angle d'ouverture du papillon des gaz, les lois d'ouvertures des soupapes d'admission et d'échappement demeurent figées.

Selon une deuxième variante de réalisation du procédé de commande d'un moteur objet de la présente invention, lorsque le débit d'air est contrôlé en régulant la position de l'angle d'ouverture du papillon des gaz, les lois d'ouvertures des soupapes d'admission et d'échappement évoluent suivant le point de fonctionnement du moteur notamment pour atteindre le couple demandé.

Selon une autre variante de réalisation du procédé de commande d'un moteur objet de la présente invention, lorsque le débit d'air est contrôlé en ajustant la position de l'angle d'ouverture du papillon des gaz et les lois d'ouverture des soupapes, la position du papillon est asservie en fonction de la valeur de la dépression régnant dans le collecteur de manière à maintenir cette dépression au niveau d'une valeur de consigne prédéterminée.

Selon une autre variante de réalisation du procédé de commande d'un moteur objet de la présente invention dans laquelle le collecteur du moteur est connecté avec un dispositif de freinage assisté par la dépression régnant dans le collecteur et commandé par une pédale de frein, lors d'un fonctionnement du moteur par lequel le débit d'air est contrôlé par le seul ajustement des lois d'ouverture des soupapes, le papillon des gaz demeurant ouvert, alors si on détecte un actionnement de la pédale de frein et si la durée de l'actionnement se prolonge au-delà d'un seuil prédéterminé, on commande le fonctionnement du moteur de façon à ce que le débit d'air soit contrôlé par l'ajustement de l'angle d'ouverture du papillon des gaz et ce afin de renforcer ladite dépression.

On comprendra mieux les buts, aspects et avantages de la présente invention, d'après la description donnée ci-après de différents modes de réalisation de l'invention, donnés à titre d'exemples non limitatifs, en se référant aux dessins annexés, dans lesquels :
- la figure 1 est une représentation schématique en coupe d'un moteur à combustion interne, ce moteur destiné à entraîner un véhicule automobile équipé d'un dispositif de freinage assisté étant plus particulièrement adapté pour mettre en oeuvre le procédé objet de la présente invention ;
- la figure 2 représente plusieurs chronogrammes utiles à la description du procédé suivant la présente invention, et
- la figure 3 est un organigramme précisant la mise en oeuvre du procédé suivant la présente invention.

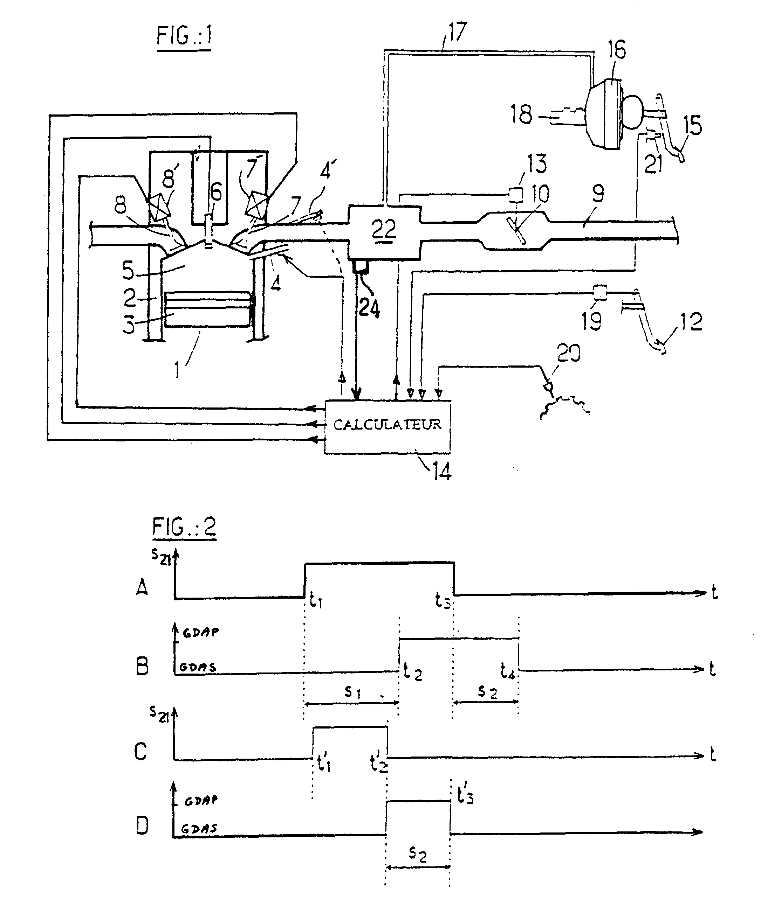

En se reportant à la figure 1, on a représenté de façon schématique un moteur à combustion interne multicylindre 1 destiné à équiper un véhicule automobile ou routier non figuré et les moyens de commande qui lui sont associés.

Le moteur 1 qui, dans l'exemple illustré est du type à allumage commandé, comprend une pluralité de cylindres identiques au cylindre figuré, référencé 2, lequel coopère classiquement avec un piston 3 de façon à définir dans sa partie supérieure une chambre de combustion 5 où débouche une bougie d'allumage 6 ainsi qu'au moins un conduit d'admission et un conduit d'échappement par des orifices correspondants sélectivement obturés par respectivement une soupape d'admission 7 et une soupape d'échappement 8. Ces soupapes d'admission 7 et d'échappement 8 sont actionnées par des actuateurs électromagnétiques correspondants 7' et 8' pilotés par un calculateur électronique numérique 14.

L'alimentation en carburant peut se faire, soit par un injecteur 4 débouchant directement dans la chambre de combustion dans le cas où le moteur est du type à injection directe, soit par un injecteur 4' débouchant dans le circuit d'admission en amont de la soupape d'admission 7 dans le cas où le moteur est du type à injection indirecte.

L'air frais est amené à la chambre de combustion 5 par l'intermédiaire d'un circuit d'admission 9 dans lequel est interposé en amont du collecteur d'admission 22 par lequel l'air est réparti aux différents cylindres, un volet obturateur ou papillon des gaz 10. Ce papillon 10 est manoeuvré par un moteur électrique 13 piloté par le calculateur électronique numérique 14.

Classiquement encore, le véhicule est équipé d'un dispositif de freinage commandé par une pédale de frein 15 et assisté par un amplificateur pneumatique 16 d'un type bien connu (master-vac). Cet amplificateur 16 est raccordé directement au collecteur d'admission 22 du moteur 1, en aval du papillon 10, par un conduit 17, à travers un clapet anti-retour (non représenté) empêchant un reflux d'air dans l'amplificateur 16.

La dépression régnant dans le collecteur d'admission du moteur permet d'amplifier l'effort de freinage exercé sur la pédale 15 par le conducteur, effort qui accroît la pression d'un liquide de freinage contenu dans un circuit hydraulique (non représenté) raccordé à un maître-cylindre 18 adjacent à l'amplificateur 16.

Cet amplificateur de dépression 16 a été donné à titre d'exemple non limitatif des dispositifs auxiliaires requérant pour fonctionner une source de dépression et qui utilisent classiquement la dépression collecteur. On aurait pu ainsi tout aussi bien décrire un dispositif de purge des vapeurs de carburant piégées dans un canister ou encore dispositif de recirculation des gaz de carter (ou de blow-by).

Le calculateur 14 est dûment programmé pour gérer le fonctionnement du moteur et notamment la quantité de carburant injectée ou l'instant d'allumage du moteur, de manière à délivrer le couple demandé par le conducteur, connu du calculateur par une mesure de l'enfoncement de la pédale d'accélérateur 15, délivrée par un capteur potentiométrique 19, dans le respect de relations qui lient l'angle d'avance à l'allumage au remplissage en air, à la dilution par les gaz brûlés réaspirés et à divers paramètres tels que le régime du moteur, la température de l'air ambiant, celle du liquide de refroidissement du moteur, etc., comme cela est bien connu de l'homme de métier.

Conformément au procédé de commande objet de la présente invention, le calculateur 14 est également dûment programmé pour contrôler le débit d'air admis dans les chambres de combustion suivant la valeur du couple demandé par le conducteur selon deux modes distincts :
- soit par l'adaptation des lois de calage des soupapes 7 et 8, le papillon 10 étant alors maintenu en position pleine ouverture, ce mode sera désigné par l'acronyme GDAS (Gestion du Débit d'Air par les Soupapes) ;
- soit par l'adaptation de l'angle d'ouverture du papillon 10, les lois de calage des soupapes étant alors figées, par exemple selon une loi représentative d'une loi d'arbre à cames fixe habituellement adoptée pour les moteurs fonctionnant avec un rapport air/carburant stoechiométrique, ce mode sera désigné par l'acronyme GDAP (Gestion du Débit d'Air par le Papillon).

Pour mettre en oeuvre ce procédé de commande, le calculateur de commande 14 utilise (selon certaines variantes de réalisation de l'invention détaillées ci-après) en plus des informations précitées, celles délivrées par trois capteurs. Il s'agit d'un capteur 20 de la vitesse du véhicule, constitué classiquement par un capteur à réluctance magnétique placé en face d'une roue dentée, par exemple, d'un capteur 21 délivrant au calculateur 14 un signal quand le conducteur du véhicule appuie sur la pédale de frein 15, et d'un capteur de pression collecteur 24.

L'ensemble des moyens schématisés sur la figure 1 constitue un dispositif permettant la mise en oeuvre du procédé suivant l'invention.

Avant d'aborder plus dans le détail le procédé objet de la présente invention, il convient de préciser le principe à la base de la présente invention. Ce principe est le suivant : les dispositifs auxiliaires nécessitant certain niveau de dépression collecteur pour fonctionner, comme l'amplificateur pneumatique 16, ne sont pas sollicités en permanence pendant le fonctionnement du moteur, mais au contraire de façon très épisodique. Ainsi, pour ce qui est de l'assistance au freinage, cette dernière n'est sollicitée que lors de l'enfoncement de la pédale de frein. De même, pour ce qui est de la purge des vapeurs de carburant piégées dans le canister ou de la recirculation des gaz de carter, ces actions ne sont opérées que dans des conditions bien déterminées de fonctionnement du moteur.

Dès lors, si le collecteur 22 constitue la source de dépression de ces dispositifs auxiliaires, il n'est pas nécessaire que règne en permanence une forte dépression dans le collecteur 22 mais simplement qu'une dépression suffisante soit présente lorsque ces dispositifs doivent être activés.

Ainsi donc, tant que ces dispositifs ne sont pas activés il n'est pas nécessaire de disposer d'une forte dépression dans le collecteur 22 et par conséquent, on peut alors piloter le débit d'air directement en contrôlant l'ouverture des soupapes et donc fonctionner préférentiellement selon le mode GDAS. Ce mode GDAS qui permet d'améliorer le rendement du moteur et de réduire la consommation de carburant dans les plages de fonctionnement moteur où les dispositifs auxiliaires ne sont pas actifs.

Par contre, lorsque ces dispositifs auxiliaires sont activés, il est alors nécessaire de générer un niveau suffisant de dépression dans le collecteur d'admission où s'effectue la prise de dépression de ces dispositifs et par conséquent de fermer de façon adaptée le papillon 10. On pilote alors le débit d'air par le papillon 10, le moteur fonctionnant en mode GDAP.

Ainsi, le procédé objet de la présente invention permet tout à la fois d'améliorer le rendement du moteur dans de très nombreux points de fonctionnement du moteur et de faire fonctionner les dispositifs auxiliaires à partir de la dépression collecteur et ce, sans utiliser de moyens spécifiques pour générer la dépression nécessaire au fonctionnement des dispositifs auxiliaires, moyens coûteux et consommant une partie non négligeable de l'énergie mécanique du moteur.

On se réfère maintenant à la figure 2 pour préciser le procédé objet de la présente invention.

On a représenté en A et B respectivement, le signal de sortie s₂₁ du détecteur 21 de position de la pédale de frein 15 et l'évolution parallèle, dans le temps, des modes de gestion du débit d'air tels que commandés, suivant l'invention, par le calculateur 14. A l'instant t₁ (graphe A), le signal s₂₁ passe à un niveau haut pour signaler que le conducteur appuie sur la pédale de frein, alors que le mode GDAS (graphe B) est actif et mise en oeuvre par des moyens (essentiellement logiciels) appropriés incorporés au calculateur 14 pour déterminer les lois d'ouvertures des soupapes 7 et 8 et commander le remplissage en air ou en mélange carburé suivant le point de fonctionnement correspondant du moteur et en particulier suivant le couple demandé. Ces lois d'ouverture des soupapes ne sont pas l'objet de la présente invention et ne sont donc pas détaillées dans la présente description.

Des moyens de commande (essentiellement logiciels) sont donc incorporés au calculateur 14 pour mettre en oeuvre le procédé objet de la présente invention. Ces moyens logiciels comprennent ainsi des moyens pour mesurer la durée d'actionnement de la pédale de frein, à compter de l'instant t₁, et pour comparer cette durée à un seuil prédéterminé s₁, considéré comme correspondant à une durée d'actionnement de la pédale de frein propre à réduire la vitesse du véhicule automobile à la valeur souhaitée par le conducteur, dans le délai attendu par celui-ci.

Si la pédale de frein reste comprimée pendant un intervalle de temps plus long que s₁ = t₂ - t₁, le calculateur 14 bascule, dès l'instant t₂, sur le mode de gestion GDAP, entendu que ce mode entraîne la fermeture au moins partielle du papillon 10 et donc un relèvement concomitant de la dépression du collecteur d'admission, propre à accroître l'assistance dans le freinage du véhicule, et donc propre à maintenir le niveau de l'effort exercé sur la pédale de frein à une valeur convenable.

Le mode GDAP est commandé par le calculateur 14 qui pilote simultanément la nouvelle loi d'ouverture des soupapes et l'angle d'ouverture du papillon 10 (par l'intermédiaire du moteur 13) nécessaire pour assurer la conservation du couple demandé.

Lorsque le conducteur cesse ensuite d'appuyer sur la pédale de frein à l'instant t_{3,} le moteur qui fonctionnait jusqu'alors en mode GDAP peut à nouveau basculer en mode GDAS. On peut également en variante de réalisation ne pas réinstaller immédiatement le mode GDAS. Selon un mode particulier de réalisation du procédé, on peut maintenir, en effet, le mode GDAP pendant un intervalle de temps s₂ = t₄ - t₃ de durée prédéterminée, propre à assurer un niveau suffisant de dépression dans l'amplificateur pneumatique 16 et donc assurer l'efficacité d'un coup de pédale de frein éventuel suivant.

Les graphes C,D de la figure 2 sont analogues aux graphes A et B respectivement et correspondent à une situation dans laquelle, lors d'un freinage, le conducteur appuie sur la pédale 15 pendant un intervalle de temps t'₂ - t'₁ d'une durée inférieure au seuil s₁ évoqué ci-dessus. Cela signifie que la dépression disponible au collecteur d'admission pour assister le freinage du véhicule était alors suffisante pour ralentir le véhicule conformément à l'attente du conducteur, dans un temps suffisamment court. Point n'est besoin, en principe, de basculer du mode GDAS au mode GDAP.

Avantageusement, cependant, suivant la présente variante de réalisation de l'invention, on repasse tout de même en mode GDAP pendant l'intervalle de temps s₂ mentionné ci-dessus, et pour les mêmes raisons, à savoir assurer l'efficacité du prochain coup de pédale de frein.

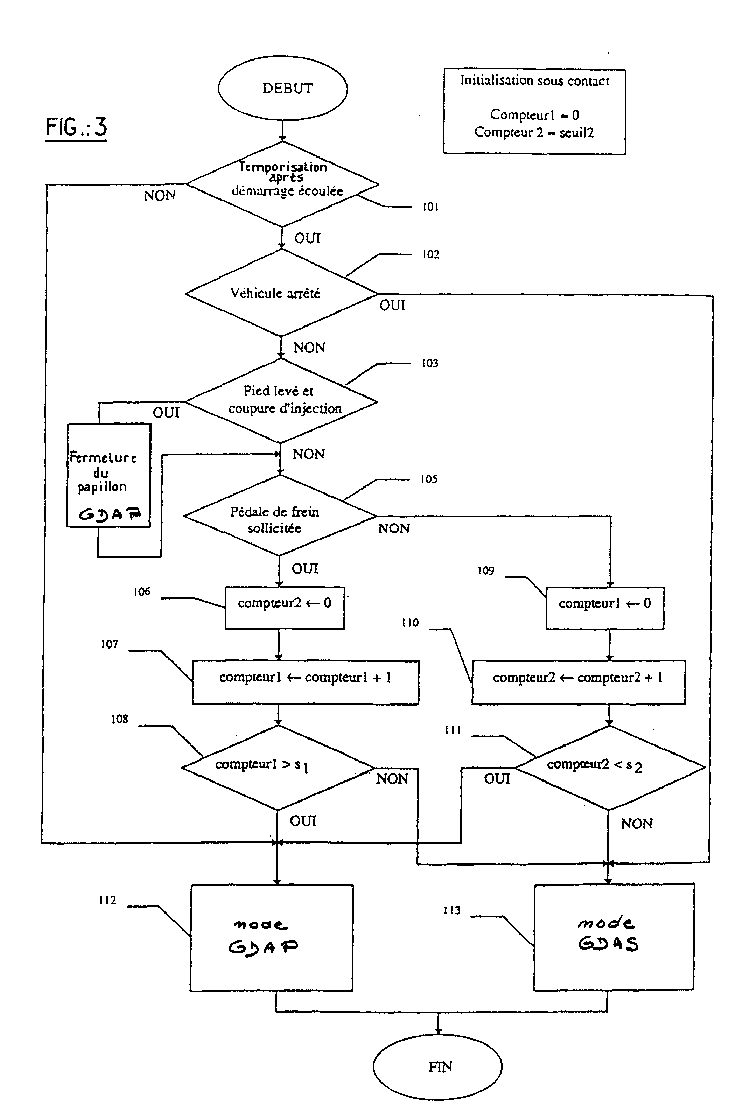

On se réfère maintenant à l'organigramme de la figure 3 pour décrire la stratégie suivant l'invention en plus de détails. Cet organigramme est celui d'une tâche, ou "routine", exécutée périodiquement par le calculateur 14, par exemple tous les 10 millisecondes. Le sous-programme d'exécution de cette tâche commence par une initialisation à zéro et à la valeur s₂ de premier et deuxième compteurs, respectivement, présents dans le calculateur 14, pour des buts qui sont décrits plus loin. Cette initialisation peut s'opérer, par exemple, à la mise sous contact électrique du démarreur du moteur du véhicule.

A l'étape 101, on compare le temps qui s'est écoulé depuis le démarrage du moteur du véhicule, à une temporisation de durée prédéterminée s₃, par exemple s₃ = 3s. Des moyens d'horloge, normalement incorporés au calculateur, assurent la mesure de temps nécessaire. Si l'on n'est pas sorti de cette temporisation, c'est que le moteur est encore en phase de démarrage. On fixe alors le mode de fonctionnement GDAP (étape 112) pour obtenir une dépression dans l'assistance qui soit suffisante pour un freinage éventuel.

Si par contre le temps écoulé est plus long que ladite temporisation s₃, on passe à l'étape 102 où l'on examine le signal issu du capteur de vitesse 20, pour savoir si le véhicule est à l'arrêt ou non. S'il l'est, point n'est besoin d'accroître l'assistance, on passe donc au mode GDAS (étape 113). S'il ne l'est pas, on passe également en mode GDAS mais on examine (étape 103) le niveau du signal de sortie du capteur 19 sensible à la position de la pédale d'accélérateur 12. Si ce niveau est représentatif d'une position "pied levé" de cette pédale, et que le calculateur 14 a coupé l'alimentation de l'injecteur 4 (ou 4'), comme c'est le cas notamment quand le conducteur débraye l'embrayage du moteur du véhicule pour commander un changement de rapport dans une boîte de vitesses associée au moteur, on commande (étape 104) le moteur électrique 13 pour qu'il ferme le papillon 10 de manière à établir une dépression maximale dans le collecteur d'admission du moteur, en vue d'un éventuel freinage assisté par cette dépression.

Cette fermeture du papillon des gaz en phase de décélération n'est donnée qu'à titre d'exemple non limitatif. On peut en effet parfaitement contrôler une telle phase de décélération en jouant uniquement sur les lois d'ouverture des soupapes et donc rester en mode GDAS. Ce basculement en mode GDAP lors de la survenue d'une décélération montre simplement que l'on peut également passer du mode GDAS au mode GDAP même si les dispositifs auxiliaires utilisant la dépression collecteur ne sont pas directement activés. Dans ce cas, le changement de mode de fonctionnement permet, de façon anticipée, de recharger en dépression l'amplificateur pneumatique 16 ce qui offre une plus grande sécurité d'utilisation et évite grâce à cette réserve de repasser en mode GDAP pour des points de fonctionnement où l'incidence du mode de contrôle du débit d'air sur la consommation en carburant serait forte.

A l'étape 105, on examine le niveau du signal de sortie s₂₁ du capteur 21 pour savoir si le conducteur actionne ou non la pédale de frein 15. Dans l'affirmative, le deuxième compteur (compteur 2) évoqué ci-dessus est chargé avec la valeur 0 (étape 106) et le premier compteur (compteur 1) est incrémenté d'une unité (étape 107). A l'étape 108, on compare le compte contenu dans le compteur 1 au seuil s₁ évoqué ci-dessus. Si le seuil est dépassé (comme c'est le cas à l'instant t₂, graphe B de la figure 2), un renforcement de l'assistance est nécessaire pour assurer la fin du freinage. Le calculateur bascule alors en mode de fonctionnement GDAP (étape 112). Si le seuil n'est pas atteint, c'est que l'on est encore à l'intérieur de l'intervalle de temps (t₂ - t₁) du graphe A de la figure 2, pendant lequel on reste en mode GDAS (étape 113).

Dès que le conducteur cesse de solliciter la pédale de frein 15, la réponse au test de l'étape 105 devient négative et le programme se poursuit alors par une branche passant par les étapes 109,110 et 111. Le compteur 1 est remis à zéro (étape 109), le compteur 2 est incrémenté (étape 110) et son contenu est comparé à un compte représentatif de l'intervalle de temps s₂ évoqué ci-dessus (étape 111). Aussi longtemps que ce compte s₂ n'est pas atteint, on reste en mode GDAP (étape 112) comme illustré sur les graphes B et D de la figure 2.

A la suite d'un certain nombre de bouclage du programme par la branche 109,110,111, le compte du compteur 2 finit par dépasser s₂ et le calculateur 14 active alors le mode GDAS (étape 110), la dépression au collecteur d'admission ayant été remontée sensiblement au niveau atteint avant le freinage intervenant entre t₁ et t₃ au graphe A de la figure 2, ou entre t'₁ et t'₂ au graphe C de cette même figure, ce qui assure l'efficacité d'une éventuelle nouvelle action du conducteur sur la pédale de frein 15.

Afin de décrire plus précisément encore le procédé de commande objet de l'invention et présenter les variantes de réalisation également envisageables, on apportera les précisions suivantes.

Les modes GDAP et GDAS ont été décrits comme deux modes de fonctionnement distincts par lesquels le débit d'air admis dans les chambres de combustion et par voie de conséquence le couple délivré par le moteur est ajusté au point de fonctionnement considéré du moteur respectivement à travers les lois d'ouverture des soupapes 7 et 8 (le papillon étant alors immobilisé avec une valeur d'ouverture donnée) et à travers l'angle d'ouverture du papillon des gaz 10 (les soupapes étant alors activées suivant une loi prédéterminée fixe).

Il est clair que l'on peut envisager en variante de réalisation des modes GDAS' et GDAP' dans lesquels on agit à la fois sur l'angle d'ouverture du papillon des gaz 10 et sur les lois d'ouverture des soupapes 7,8 (en particulier dans les cas où les lois d'ouverture des soupapes ne permettent pas seules d'assurer le remplissage souhaité). Le mode GDAS' se caractérise toutefois par le fait que même si l'on joue sur l'angle d'ouverture du papillon 10, le niveau de dépression reste insuffisant pour répondre aux exigences des dispositifs auxiliaires comme l'assistance au freinage. Quant au mode GDAP', il se caractérise lui par le fait que même si les lois d'ouverture des soupapes ne sont pas fixes mais adaptées au point de fonctionnement du moteur, le papillon est fermé de façon à assurer un niveau de dépression suffisante pour satisfaire les besoins des dispositifs auxiliaires.

Compte tenu de ces nouvelles notations, l'invention objet de la présente invention vise donc à passer d'un mode GDAS ou GDAS' à un mode GDAP ou GDAP', dès lors que la mise en oeuvre d'un dispositif auxiliaire exige un niveau de dépression collecteur suffisant.

Comme mode particulier de fonctionnement de type GDAP' on peut citer celui consistant à piloter le papillon des gaz de façon à produire une dépression de valeur constante en utilisant l'information fournie par le capteur de pression collecteur 24. La position du papillon est alors asservie à une consigne de dépression par pilotage en boucle fermée à partir de l'information pression collecteur fournie au calculateur 14. Les lois d'ouverture des soupapes sont alors déterminées en conséquence pour maintenir le niveau de couple demandé.

En asservissant le papillon 10 sur une consigne de dépression , on peut améliorer le contrôle du moteur, notamment en limitant les pertes par pompage en ajustant au juste nécessaire le niveau de la dépression collecteur. En effet, dans la plupart des cas une simple dépression de 100 à 150 mbar suffit à assurer le fonctionnement des dispositifs auxiliaires.

De plus, ce contrôle de la dépression permet de mieux gérer les transitoires notamment en injection indirecte : en maintenant une dépression constante et connue dans l'admission, on perturbe moins le film d'essence et la stratégie de compensation de mouillage de paroi s'en trouve améliorée. On facilite ainsi, la maîtrise de la richesse en transitoire, donc la dépollution du moteur et on améliore l'agrément de conduite.

Bien évidemment cet asservissement de la position du papillon sur une consigne de dépression est mis en oeuvre avec une pré-commande pur anticiper les transitoires de charge ou de régime. Cette pré-commande réalisée par cartographie ou par modèle doit notamment permettre une anticipation de la correction des lois de distribution pour maintenir le couple constant.

Bien entendu, l'invention n'est nullement limitée aux modes de réalisation décrits et illustrés qui n'ont été donnés qu'à titres d'exemples.

Au contraire, l'invention comprend tous les équivalents techniques des moyens décrits ainsi que leurs combinaisons si celles-ci sont effectuées suivant son esprit.

## Revendications

1. Procédé de commande d'un moteur à combustion interne (1) comportant un collecteur d'admission (22) connecté avec au moins un dispositif auxiliaire fonctionnant avec l'assistance de la dépression régnant dans ledit collecteur (22) tel qu'un amplificateur pneumatique (16) d'un dispositif de freinage, ledit moteur (1) comportant également un papillon des gaz (10) manoeuvré par un actuateur (13) piloté par des moyens électroniques de commande (14) et des soupapes d'admission (7) et d'échappement (8) manoeuvrées par des actuateurs (7',8') pilotés par des moyens électroniques de commande (14), caractérisé en ce que le débit d'air du moteur, déterminé selon le point de fonctionnement du moteur et notamment le couple demandé, est contrôlé sélectivement suivant les besoins en dépression collecteur dudit dispositif auxiliaire (16) en ajustant :
a) les lois d'ouverture des soupapes (7,8), l'action sur l'angle d'ouverture du papillon des gaz (10) demeurant limitée (modes GDAS, GDAS');
b) l'angle d'ouverture du papillon des gaz (10) et éventuellement les lois d'ouverture des soupapes (7,8)(modes GDAP, GDAP').

2. Procédé de commande d'un moteur à combustion interne (1) selon la revendication 1, caractérisé en ce que lorsque le dispositif auxiliaire (16) nécessite un niveau de dépression suffisant dans le collecteur d'admission (22), le débit d'air est alors contrôlé en ajustant l'angle d'ouverture du papillon des gaz (10) et éventuellement les lois d'ouverture des soupapes (7,8)(modes GDAP, GDAP').

3. Procédé de commande d'un moteur à combustion interne (1) selon la revendication 2, caractérisé en ce que lorsque le débit d'air est contrôlé en ajustant la position de l'angle d'ouverture du papillon des gaz (10), les lois d'ouvertures des soupapes d'admission (7) et d'échappement (8) demeurent figées (mode GDAP).

4. Procédé de commande d'un moteur à combustion interne (1) selon l'une quelconque des revendications 1 à 2, caractérisé en ce que lorsque le débit d'air est contrôlé en ajustant la position de l'angle d'ouverture du papillon des gaz (10), les lois d'ouvertures des soupapes d'admission (7) et d'échappement (8) évoluant notamment suivant le point de fonctionnement du moteur pour atteindre le couple demandé au moteur (mode GDAP').

5. Procédé de commande d'un moteur à combustion interne (1) selon la revendication 4, caractérisé en ce que lorsque le débit d'air est contrôlé en ajustant la position de l'angle d'ouverture du papillon des gaz (10) et les lois d'ouverture des soupapes (7,8), la position du papillon est asservie en fonction de la valeur de la dépression régnant dans le collecteur (22) de manière à maintenir cette dépression au niveau d'une valeur de consigne prédéterminée (mode GDAP').

6. Procédé de commande d'un moteur à combustion interne (1) selon l'une quelconque des revendications 1 à 5, le collecteur (22) dudit moteur étant connecté avec un dispositif de freinage (16) assisté par la dépression régnant dans ledit collecteur (22) et commandé par une pédale de frein (15), caractérisé en ce que lors d'un fonctionnement du moteur par lequel le débit d'air est contrôlé par le seul ajustement des lois d'ouverture des papillon des gaz (10) demeurant ouvert (modes GDAS, GDAS'),
i) on détecte un actionnement de la pédale de frein (15) et on mesure le temps qui s'est écoulé depuis cet actionnement, et
ii) dès que la durée de l'actionnement se prolonge au-delà d'un seuil (s₁) prédéterminé, on contrôle le débit d'air du moteur par l'ajustement de l'angle d'ouverture du papillon des gaz (modes GDAP, GDAP') pour renforcer ladite dépression.

7. Procédé de commande d'un moteur à combustion interne (1) selon la revendication 6, caractérisé en ce que, si la pédale de frein (15) cesse d'être actionnée avant l'écoulement dudit seuil de durée prédéterminé (s₁), on contrôle le débit d'air du moteur par l'ajustement de l'angle d'ouverture du papillon des gaz (modes GDAP, GDAP').

8. Procédé de commande d'un moteur à combustion interne (1) selon l'une quelconque des revendications 6 à 7, caractérisé en ce qu'on rétablit le contrôle du débit d'air par l'ajustement de lois d'ouverture des soupapes (7,8) (modes GDAS, GDAS') dès la fin d'un intervalle de temps de durée prédéterminé (s₂), mesuré à partir de la cessation de l'actionnement de la pédale de frein (15).

9. Procédé de commande d'un moteur à combustion interne (1) selon l'une quelconque des revendications 6 à 8, caractérisé en ce qu'on mesure l'intervalle de temps écoulé depuis un démarrage du véhicule et en ce qu'on contrôle le débit d'air du moteur par l'ajustement de l'angle d'ouverture du papillon des gaz (modes GDAP, GDAP') si ledit intervalle de temps est inférieur à une temporisation (s₃) prédéterminée.
